# EUROPÄISCHE PATENTSCHRIFT

(11) **EP 1 760 505 B1**
(45) Veröffentlichungstag und Bekanntmachung des Hinweises auf die Patenterteilung: **11.03.2009**
(21) Anmeldenummer: 05291809.1
(22) Anmeldetag: 31.08.2005
(51) Int. Cl.: G02B 6/44

(54) **Verbundkabel**
Connection cable
Cable de connexion

(43) Veröffentlichungstag der Anmeldung: 07.03.2007
(73) Patentinhaber: Nexans, 75008 Paris (FR)
(72) Erfinder: Büthe, Harald, Dip.-Ing., 41334 Nettetal (DE); Heymanns, Harald, Dipl.-Ing., 41239 Mönchengladbach (DE); Verdenhalven, Gerd, Dipl.-Ing., 31683 Obernkirchen (DE)
(74) Vertreter: Döring, Roger

(56) Entgegenhaltungen:
- EP-A- 0 853 249
- US-A1- 2003 087 975

## Beschreibung

Die Erfindung betrifft ein Verbundkabel zur Verlegung durch Einziehen oder Einblasen in ein Kabelrohr.

Aus der DE 101 49 122 ist ein Verbundkabel bekannt, welches isolierte Kupferdrähte und mehrere Lichtwellenleiter enthält, wobei mehrere paarweise verdrillte Leitungen, die jeweils ein Paar isolierter Kupferdrähte umfassen, vorgesehen sind. Die Paare isolierter Kupferdrähte sind miteinander in unterschiedlichen Verlegelängen verdrillt. Jeder Lichtwellenleiter ist als Mehrfachkern-Kunststofflichtwellenleiter ausgebildet. Die paarweise verdrillten isolierten Kupferdrähte und die Mehrfachkern-Kunststofflichtwellenleiter sind einander benachbart angeordnet und sämtliche paarweise verdrillten Kupferleiter und die Mehrfachkern-Kunststofflichtwellenleiter sind miteinander verdrillt.

Aus der EP 0 853 249 ist ein zusammengesetztes optisches Verteilerkabel bekannt, welches aus einem zentral angeordneten Zugelement besteht, um welches jeweils zwei isolierte elektrische Leiter und zwei optische Kabel herumgeseilt sind. In den Zwickeln zwischen den isolierten elektrischen Leitern und den optischen Kabels können Verstärkungselemente angeordnet sein. Zwischen einem Kabelmantel aus thermoplastischem Material und der durch das Zentralelement, die isolierten elektrischen Leiter, die optischen Kabel und die Verstärkungselemente bestehenden Kabelseele befindet sich eine weitere Lage aus Zugelementen, die mit bei Zutritt von Feuchtigkeit quellendem Material beschichtet bzw. gefüllt sind. Die um das Zentralelement herumgeseilten optischen Kabel bestehen aus einer Glasfaser, einer Schicht aus Kunststoff, einer die Schicht aus Kunststoff umhüllenden Lage aus Zugelementen und einem äußeren Mantel aus Kunststoff.

Die bekannten Kabel weisen einen für die Einblastechnik zu großen Außendurchmesser auf und sind darüberhinaus wenig flexibel. Die bekannten Verbundkabel sind daher ausschließlich für die Anwendung Hausverteilerkabel konzipiert.

Der vorliegenden Erfindung liegt die Aufgabe zugrunde, ein Verbundkabel bereitzustellen, welches äußerst flexibel ist, eine ausreichende Zugfestigkeit aufweist und zur Verlegung durch Einziehen oder Einblasen in ein Kanalrohr geeignet ist.

Diese Aufgabe wird durch die im Anspruch 1 erfaßten Merkmale gelöst.

Die Lichtwellenleiter ermöglichen einen Anschluß von Gebäuden an das digitale Datennetz (fiber to the home-FTTh), wogegen das Paar aus isolierten Kupferdrähten zur Fernspeisung von Verbrauchern dient, aber auch zu Ortungszwecken des Verbundkabels verwendet werden kann. Darüberhinaus kann das Paar auch als Stammleitung für Telefon (POTS) und/oder eine hochbitratige x DSL-Anbindung dienen.

Bei dem Verbundkabel nach der Lehre der Erfindung handelt es sich um ein Außenkabel, welches in besonderer Weise zur Verlegung durch Einblasen in Kabelrohre geeignet ist.

Weitere vorteilhafte Ausgestaltungen der Erfindung sind in den Unteransprüchen erfaßt.

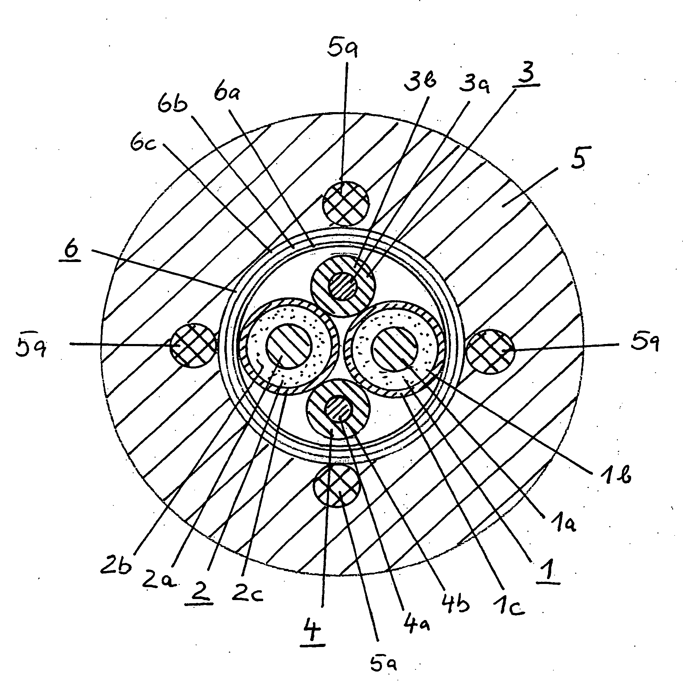

Die Erfindung ist anhand des in der Figur schematisch dargestellten Ausführungsbeispiels näher erläutert.

Das Verbundkabel besteht aus einem Paar aus zwei isolierten Kupferleitern 1 und 2, zwei Lichtwellenleitern 3 und 4, einem Mantel 5 sowie einer das Paar und die Lichtwellenleiter 3 und 4 bildende zentral angeordnete Kabelseele umgebenden Bewicklung 6.

Die Isolierten Kupferleiter 1 und 2 bestehen jeweils aus dem Leiter 1a, 2a, der als einzelner Kupferdraht oder aus mehreren Kupferdrähten gebildet sein kann.

Die Kupferdrähte 1a, 2a sind von einer ersten Isolierschicht 1b, 2b umgeben, welche aus geschäumtem Polyethylen besteht. Über der ersten Isolierschicht 1 b, 2b ist eine zweite Isolierschicht 1c, 2c angeordnet, die aus ungeschäumtem Polyethylen besteht. Ein solcher Isolationsaufbau ist in der Nachrichtenkabeltechnik an sich bekannt und wird als foamskin bezeichnet. Die isolierten Kupferdrähte sind miteinander verseilt und bilden das Paar.

Die Lichtwellenleiter 3 und 4 bestehen aus einer Glasfaser oder einer Kunststofffaser 3a, 4a, welche wie bekannt, aus einem lichtleitenden Kern und einer den lichtleitenden Kern umhüllenden üblicherweise aus Kunststoff bestehenden Schicht bestehen. Die Glas- oder Kunststofffaser 3a, 4a ist von einer Kunststoffschicht 3b, 4b umgeben. Glas-oder Kunststofffaser 3a. 4a und Kunststoffschicht 3b, 4b bilden eine Festader bzw. eine Quasifestader. Die Lichtwellenleiter 3 und 4 sind in den Verseilzwickeln des Paares angeordnet.

Die Bewicklung 6 besteht aus einer ersten Schicht 6a aus nichthygroskopischen Folien, einer zweiten Schicht 6b aus einer Aluminiumfolie sowie einer dritten Schicht 6c aus nichthygroskopischen Folien. Die Schicht 6b aus Aluminiumfolie dient der Abschirmung.

Der Mantel 5 besteht vorteilhafterweise aus Polyethylen, insbesondere einem Polyethylen hoher Dichte (HDPE). In dem Mantel 5 sind vier Verstärkungselemente 5a angeordnet, die entweder aus einem Polyaramid oder aus glasfaserverstärktem Kunststoff bestehen können. Die Verstärkungselemente 5a sind in dem Mantel 5 eingebettet. Sie verlaufen in Längsrichtung des Kabels oder mit einem Winkel von höchstens 10° zur Längsachse des Kabels in Schlagrichtung des Paares.

Bei einer besonders vorteilhaften Ausgestaltung der Erfindung weist das Verbundkabel folgende Eigenschaften auf

| | |
|---|---|
| Außendurchmesser | 6,5 mm |
| Gewicht | 40 kg/km |
| Mindestbiegeradius (statisch) | 40 mm |
| Mindestbiegeradius (dynamisch) | 80 mm |
| Max. Zugkraft | 220 N |

Das erfindungsgemäße Verbundkabel läßt sich durch die sogenannte Einblastechnik in Kabelrohre einbringen.

Die Kombination von Lichtwellenleitern und einem Kupferpaar bietet eine umfassende Lösung zur Fernspeisung von FTTh Endgeräten bzw. Verteilern. Das Kupferpaar kann beispielsweise auch zur Ortung des Verbundkabels sowie als Stammleitung für POTS und/oder eine hochbitratige x DSL-Anbindung genutzt werden.

## Patentansprüche

1. Verbundkabel zur Verlegung durch Einziehen oder Einblasen in ein Kabelrohr, welches aufweist:
a) zwei miteinander zu einem Paar verseilte isolierte Kupferdrähte (1,2), welche gemeinsam mit
b) zwei einfasrigen Lichtwellenleitern (3,4) im Zentrum des Kabels angeordnet sind sowie
c) einen Kabelmantel (5),
wobei die Isolierung der Kupferdrähte aus einer inneren Schicht (1b,2b) aus geschäumtem Polymer sowie einer äußeren Schicht (1c,2c) aus einem ungeschäumten Polymer (foam skin) besteht, und
die Lichtwellenleiter (3,4) in den Verseilzwickeln der miteinander verseilten, isolierten Kupferdrähte (1,2) angeordnet und Verstärkungselemente (5a) aus hochfestem Werkstoff in dem Mantel (5) eingebettet sind.

2. Verbundkabel nach Anspruch 1, **dadurch gekennzeichnet, daß** die innere Schicht (1b,2b) der Isolierung der Kupferdrähte aus geschäumtem Polyethylen und die äußere Schicht (1c,2c) der Isolierung der Kupferdrähte (1a,2a) aus ungeschäumtem Polyethylen besteht.

3. Verbundkabel nach Anspruch 1 oder 2, **dadurch gekennzeichnet, daß** die Lichtwellenleiter (3,4) jeweils aus einer lichtleitenden Glasfaser (3a,4a) und einer Kunststoffschicht (3b,4b) bestehen (Fest-/Quasifestader).

4. Verbundkabel nach einem der Ansprüche 1 bis 3, **dadurch gekennzeichnet, daß** das aus dem Paar und den Lichtwellenleitern (3,4) bestehende Verbundelement von einer Schicht (6a) aus nichthygroskopischen Folien und zumindest einer darüber angeordneten Schicht (6b) aus einer Aluminiumfolie sowie einer auf der Schicht (6b) aus einer Aluminiumfolie aufliegenden Schicht (6c) aus nichthygroskopischen Folien umgeben ist.

5. Verbundkabel nach einem der Ansprüche 1 bis 4, **dadurch gekennzeichnet, daß** die Verstärkungselemente (5a) gleichmäßig über den Umfang verteilt angeordnet sind.

6. Verbundkabel nach Anspruch 4 oder 5, **dadurch gekennzeichnet, daß** die Verstärkungselemente (5a) längseinlaufend oder mit einem Versatzwinkel von maximal 10° zur Längsachse des Verbundkabels in Schlagrichtung des Paares verlaufen.

7. Verbundkabel nach einem der Ansprüche 4 bis 6, **dadurch gekennzeichnet, daß** die Verstärkungselemente (5a) direkt auf die äußere Schicht (6c) aus nichthygroskopischen Folien aufgelegt sind.

8. Verbundkabel nach einem der Ansprüche 1 bis 7, **dadurch gekennzeichnet, daß** die Verstärkungselemente (5a) aus glasfaserverstärktem Kunststoff bestehen.

## Claims

1. A composite cable to be laid by being drawn or blown into a cable duct, which comprises:
a) at least two insulated copper wires (1,2) which are stranded with one another, which are
b) positioned together with two single-fiber optical waveguides (3,4) positioned in the center of the cable and
c) a cable sheath (5), wherein
the insulation of the copper wires comprises an inner layer (1b,2b) consisting of foamed polymer and an outer layer (1c,2c) consisting of an unfoamed polymer (foam skin), and
the optical waveguides (3,4) are arranged in the stranding gaps of the insulated copper wires (1,2) which are stranded with one another, and reinforcing elements (5a) consisting of a material having a high tensile strength are embedded in the sheath (5).

2. A cable according to claim 1, **characterized in that** the inner layer (1b,2b) of the insulation of the copper wires (1 a,2a) consists of foamed polyethylene and the outer layer (1c,2c) of the insulation of the copper wires (1a,2a) consists of unfoamed polyethylene.

3. A cable according to 1 or 2, **characterized in that** the optical waveguides (3,4) each comprises a light guiding glass fiber (3a,4a) and a plastic layer (3b,4b) (solid-/semi solid fiber).

4. A cable according to one of the claims 1 to 3, **characterized in that** the composite element comprising the pair and the optical waveguides (3,4) is surrounded by a layer (6a) of non-hygroscopic foils and at least one layer (6b) of an aluminium foil arranged thereon and a layer (6c) of non-hygroscopic foils lying on the layer (6b) of an aluminium foil.

5. A cable according to one of the claims 1 to 4, **characterized in that** the reinforcing elements (5a) are distributed uniformly over the circumference.

6. A cable according to claim 4 or 5, **characterized in that** the reinforcing elements (5a) extend such that they run in longitudinal direction or with an offset angle of a maximum of 10° with respect to the longitudinal axis of the composite cable in the direction of lay of the pair.

7. A cable according to one of the claims 4 to 6, **characterized in that** the reinforcing elements (5a) are laid directly onto the outer layer (6c) of non-hygroscopic foils.

8. A cable according to one of the claims 1 to 7, **characterized in that** the reinforcing elements (5a) consist of glass-fiber-reinforced plastic.

## Revendications

1. Câble composite à poser par tirage ou soufflage dans un conduit pour câbles, qui comprend:
a) deux fils de cuivre isolés (1, 2) toronnés l'un avec l'autre en une paire,
b) qui sont disposés au centre du câble en compagnie de deux guides d'ondes optiques à une seule fibre (3, 4), ainsi que
c) une gaine de câble (5),
dans lequel l'isolation des fils de cuivre se compose d'une couche intérieure (1b, 2b) en polymère expansé ainsi que d'une couche extérieure (1c, 2c) en un polymère non expansé (foam skin), et les guides d'ondes optiques (3, 4) sont placés dans les angles rentrants des fils de cuivre isolés (1, 2) toronnés l'un avec l'autre et des éléments de renforcement (5a) en un matériau à haute résistance sont noyés dans la gaine (5).

2. Câble composite selon la revendication 1, **caractérisé en ce que** la couche intérieure (1b, 2b) de l'isolation des fils de cuivre se compose de polyéthylène expansé et la couche extérieure (1c, 2c) de l'isolation des fils de cuivre (1a, 2a) se compose de polyéthylène non expansé.

3. Câble composite selon la revendication 1 ou 2, **caractérisé en ce que** les guides d'ondes optiques (3, 4) se composent chaque fois d'une fibre de verre conduisant la lumière (3a, 4a) et d'une couche de matière plastique (3b, 4b) (conducteur solide/quasi solide).

4. Câble composite selon l'une quelconque des revendications 1 à 3, **caractérisé en ce que** l'élément composite se composant de la paire et de guides d'ondes optiques (3, 4) est entouré par une couche (6a) de feuilles non hygroscopiques et d'au moins une couche (6b) d'une feuille d'aluminium disposée au-dessus de celle-ci ainsi que d'une couche (6c) de feuilles non hygroscopiques appliquée sur la couche (6b) d'une feuille d'aluminium.

5. Câble composite selon l'une quelconque des revendications 1 à 4, **caractérisé en ce que** les éléments de renforcement (5a) sont disposés avec une répartition uniforme sur la périphérie.

6. Câble composite selon la revendication 4 ou 5, **caractérisé en ce que** les éléments de renforcement (5a) sont disposés en direction longitudinale ou avec un angle de décalage de 10° au maximum par rapport à l'axe longitudinal du câble composite dans le sens de toronnage de la paire.

7. Câble composite selon l'une quelconque des revendications 4 à 6, **caractérisé en ce que** les éléments de renforcement (5a) sont déposés directement sur la couche extérieure (6c) de feuilles non hygroscopiques.

8. Câble composite selon l'une quelconque des revendications 1 à 7, **caractérisé en ce que** les éléments de renforcement (5a) sont constitués de matière plastique renforcée de fibres de verre.
